# EUROPÄISCHE PATENTSCHRIFT

(11) **EP 2 753 526 B1**
(45) Veröffentlichungstag und Bekanntmachung des Hinweises auf die Patenterteilung: **09.11.2016**
(21) Anmeldenummer: 12758834.1
(22) Anmeldetag: 07.09.2012
(51) Int. Cl.: B61C 15/10, B60B 39/02

(54) **VERFAHREN ZUM ÜBERWACHEN EINER SANDUNGSVORRICHTUNG**
METHOD FOR MONITORING A SANDING DEVICE
PROCÉDÉ DE SURVEILLANCE D'UN DISPOSITIF DE SABLAGE

(30) Priorität: 09.09.2011 DE 102011113070
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: RASEL, Thomas, 85635 Höhenkirchen-Siegertsbrunn (DE); TRINKBERGER, Andreas, 85435 Erding (DE)
(86) Internationale Anmeldenummer: PCT/EP2012/067547
(87) Internationale Veröffentlichungsnummer: WO 2013/034715

(56) Entgegenhaltungen:
- WO-A1-00/43223
- WO-A1-2004/033232
- WO-A2-2012/021225
- DE-U1-202009 014 775

## Beschreibung

Die Erfindung betrifft ein Verfahren zum Überwachen einer Vorrichtung, die eingerichtet ist zwischen einem Rad eines Schienenfahrzeuges und einer Schiene, auf der das Rad fährt, pneumatisch ein adhäsionssteigerndes Mittel aufzutragen, eine Überwachungsvorrichtung zur Durchführung des Verfahrens und eine Sandungsvorrichtung mit der Überwachungsvorrichtung. Ein Verfahren mit den Merkmalen des Oberbegriffs des Anspruchs 1 ist aus der DE 20 2009 014 775 U1 bekannt.

Aus der AT 503 513 B1 ist es bekannt, einer Sandungsvorrichtungen zum Sanden eines Rades eines Schienenfahrzeuges auf einer Schiene mit Fotosensoren zu überwachen.

Es ist Aufgabe der Erfindung, das bekannte Verfahren zum Überwachen einer Vorrichtung, die eingerichtet ist zwischen ein Rad eines Schienenfahrzeuges und ein Schiene, auf der das Rad fährt, pneumatisch ein adhäsionssteigerndes Mittel aufzutragen zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Überwachen einer Vorrichtung, die eingerichtet ist zwischen ein Rad eines Schienenfahrzeuges und ein Schiene, auf der das Rad fährt, pneumatisch ein adhäsionssteigerndes Mittel aufzutragen, die Schritte Erfassen eines pneumatischen Widerstandes der Vorrichtung und Plausibilisieren eines Zustandes der Vorrichtung basierend auf dem erfassten pneumatischen Widerstand.

Dem angegebenen Verfahren liegt die Überlegung zugrunde, dass die als optische Sensorik verwendeten Fotosensoren in der eingangs genannten Sandungsvorrichtung zwar in der Lage sind, zu erkennen, ob die Sandungsvorrichtung Sand auf die Schiene ausgibt oder nicht, die optische Sensorik überwacht die Sandungsvorrichtung an einem einzigen bestimmten Punkt. Erfasst die optische Sensorik einen Ausfall der Sandung, ist es aufgrund dieser lokalen Überwachung nicht möglich, weitere Ursachen (wie beispielsweise fehlender Sand, vorhandene Sandbrücken oder ein verstopftes Rohr) zum Ausfall der Sandung zu erfahren.

Demgegenüber wird mit dem angegebenen Verfahren vorgeschlagen, die lokale Überwachung auf wenigstens zwei Punkte in der Sandungsvorrichtung auszudehnen. Dies wird im Rahmen des vorliegenden Verfahrens dadurch erreicht, dass eine relative Größe in der Sandungsvorrichtung herangezogen wird, deren Erfassung eine messtechnische Erfassung an wenigstens zwei verschiedenen Punkten in der Sandungsvorrichtung voraussetzen. Eine derartige Größe ist der pneumatische Widerstand der Sandungsvorrichtung, auch Strömungswiderstand der Sandungsvorrichtung genannt. Der pneumatische Widerstand gibt in einer dem Fachmann bekannten Weise in der Sandungsvorrichtung ein Verhältnis zwischen den Luftdruckverlusten und den Luftströmungsverlusten an.

Anhand des pneumatischen Widerstandes lässt sich die Sandungsvorrichtung charakterisieren. Einer funktionsfähigen Sandungsvorrichtung typische Fehlerfälle in der Sandungsvorrichtung können bestimmte Eigenschaften (wie Wertebereiche, zeitliche oder andere Verläufe, und so weiter) des pneumatischen Widerstandes zugeordnet werden, so dass sich umgekehrt die Funktionstüchtigkeit der Sandungsvorrichtung anhand ihres pneumatischen Widerstandes nicht nur qualitativ (funktionstüchtig oder nicht) sondern auch quantitativ (kein Sand, Verstopfung, Sandbrücken, ...) plausibilisieren lässt.

Der pneumatische Widerstand benötigt als relative Größe prinzipiell eine Luftdruckund Luftströmungserfassung an zwei verschiedenen Stellen. Soll beispielsweise nur ein Rohr innerhalb der Sandungsvorrichtung überwacht werden, so können diese Größen am Anfang und Ende des Rohres erfasst werden. Besonders günstig ist es jedoch, die für die Bestimmung des pneumatischen Widerstandes notwendigen Größen an der Druckluftzufuhr und/oder am Abgabepunkt der Sandungsvorrichtung zu erfassen, an dem der Sand auf die Schiene gestreut wird. In beiden Fällen braucht hier kein Luftdruck erfasst zu werden, weil der Luftdruck an der Druckluftzufuhr gleich dem Luftdruck der Luftquelle und der Luftdruck am Abgabepunkt gleich dem Umgebungsdruck ist. Somit wäre es notwendig nur noch die Luftströmung zu erfassen, um den pneumatischen Widerstand zu bestimmen. Zwar könnte die Luftdruck- und Luftströmungserfassung an lediglich einer beiden zuvor genannten Stellen erfolgen, in einer besonderen Weiterbildung umfasst das angegebene Verfahren jedoch den Schritt Erfassen des pneumatischen Widerstands der Vorrichtung zwischen einer Druckluftzufuhr, an dem der Vorrichtung Druckluft zugeführt wird und einem Abgabepunkt, an dem das durch die Druckluft bewegte adhäsionssteigernde Mittel die Vorrichtung verlässt.

Auf diese Weise ist es möglich, den pneumatischen Widerstand allein basierend auf einer Massenstromdifferenz, also der Differenz der Luftströmung, zwischen der Druckluftzufuhr und dem Abgabepunkt zu bestimmen, da als Druckluftdifferenz hier der von der Druckluftquelle eingebrachte Luftdruck herangezogen werden kann.

In einer anderen Weiterbildung des angegebenen Verfahrens umfasst die Druckluftzufuhr eine druckreduzierende Blende, wobei zum Erfassen des pneumatischen Widerstandes der reduzierte Druck verwendet wird.

Dieser Weiterbildung des angegebenen Verfahrens liegt der Gedanke zugrunde, dass zur Erfassung der Differenz der Luftströmung in der Sandungsvorrichtung eigentlich zwei Massenstromsensoren, wie beispielsweise Heißfilmluftmassensensoren oder ähnliche Sensoren herangezogen werden könnten. Derartige Massenstromsensoren sind jedoch sehr kostenintensiv und ausfallanfällig. Der Weiterbildung liegt ferner die Überlegung zugrunde, dass die Luftströmung berechnet werden könnte, wenn über einen bekannten pneumatischen Widerstand das Luftdruckverhältnis bestimmt wird. Einen derartigen bekannten pneumatischen Widerstand bringt die Blende in die Sandungsvorrichtung. Wird die Blende zudem an der Druckluftzufuhr angeordnet, braucht der Luftdruck zur Erfassung des Luftdruckverhälnisses nur einseitig erfasst zu werden, da der Luftdruck der Luftdruckzufuhr, wie bereits erwähnt bekannt ist. Gegenüber Massenstromsensoren sind Drucksensoren vergleichsweise günstig und ausfallsicher.

Daher wird der Luftmassenstrom zumindest an der Druckluftzufuhr gemäß der bevorzugten Ausführung basierend auf einem an der Blende bestehenden Druckverhältnis bestimmt.

Zwar könnte der Luftmassenstrom auch am Ausgabepunkt des Sandes basierend auf einem an einer weiteren Blende herschenden Druckverhältnis bestimmt werden, dies könnte jedoch nur erfolgen, wenn ausreichend hohe Drücke vorhanden wären um ein ausreichend messbares Druckverhältnis zu erfassen, ohne das Sandungssystem in seiner Funktionalität zu beeinflussen. Da wie bereits gesagt am Ausgabepunkt selbst nur noch Umgebungsdruck vorhanden ist, müsste dies applikationsabhängig entschieden werden.

In einer besonderen Weiterbildung umfasst das angegebene Verfahren den Schritt Plausibilisieren Zustands der Vorrichtung ferner basierend auf dem reduzierten Druck nach der an der Druckzufuhr angeordneten Blende. Dieser Weiterbildung liegt die Überlegung zugrunde, dass der Zustand der Sandungsvorrichtung zwar bereits durch den pneumatischen Widerstand erfasst wird. Der reduzierte Luftdruck nach der druckzufuhrseitig angeordneten Blende bringt jedoch den Vorteil, dass hier eine weitere Messung durchgeführt wird, was den Informationsgehalt der durchgeführten Plausibilisierung weiter steigert. Die beiden durchgeführten Plausibilisierungen können beispielsweise selbst gegenübergestellt werden, um herauszufinden, ob die Plausibilisierungsprinzipien fehlerfrei arbeiten, was nur der Fall ist, wenn das Ergebnis in beiden Fällen gleich ist. Zudem liegt das Ergebnis basierend auf der Druckmessung an der Blende schneller vor, als das Ergebnis basierend auf dem pneumatischen Widerstand, so dass gerade im Bremsfall schneller auf Fehler reagiert werden kann.

In einer anderen Weiterbildung des angegebenen Verfahrens wird zum Plausibilisieren des Zustands der Vorrichtung der erfasste pneumatische Widerstand einem Sollwiderstand gegenübergestellt. Der Sollwiderstand kann dabei über die Zeit und/oder andere Größen gesehen variabel oder fest sein.

In einer zusätzlichen Weiterbildung umfasst die Druckluftzufuhr einen Druckluftanschluss zum Zuführen von das adhäsionssteigernde Mittel bewegender Druckluft und einen Trocknungsanschluss zum Zuführen von das ahäsionssteigernde Mittel trocknender Druckluft. Das heißt, dass die oben genannte druckzufuhrseitig angeordnete Blende in beiden Anschlüssen angeordnet sein kann.

Gemäß einem weiteren Aspekt der Erfindung ist eine Überwachungsvorrichtung eingerichtet, eines der angegebenen Verfahren durchzuführen. Die Überwachungsvorrichtung kann dabei insbesondere derart erweitert werden, dass sie eingerichtet ist, ein Verfahren gemäß einem der Unteransprüche durchzuführen.

In einer Weiterbildung der angegebenen Überwachungsvorrichtung weist die angegebene Überwachungsvorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Überwachungsvorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst eine Sandungsvorrichtung zum Auftragen eines adhäsionssteigernden Mittels zwischen ein Rad eines Schienenfahrzeuges und eine Schiene, auf der das Rad fährt eine der angegebenen angegebene Überwachungsvorrichtungen.

Gemäß einem weiteren Aspekt der Erfindung umfasst ein Schienenfahrzeug eine der angegebenen Sandungsvorrichtungen.

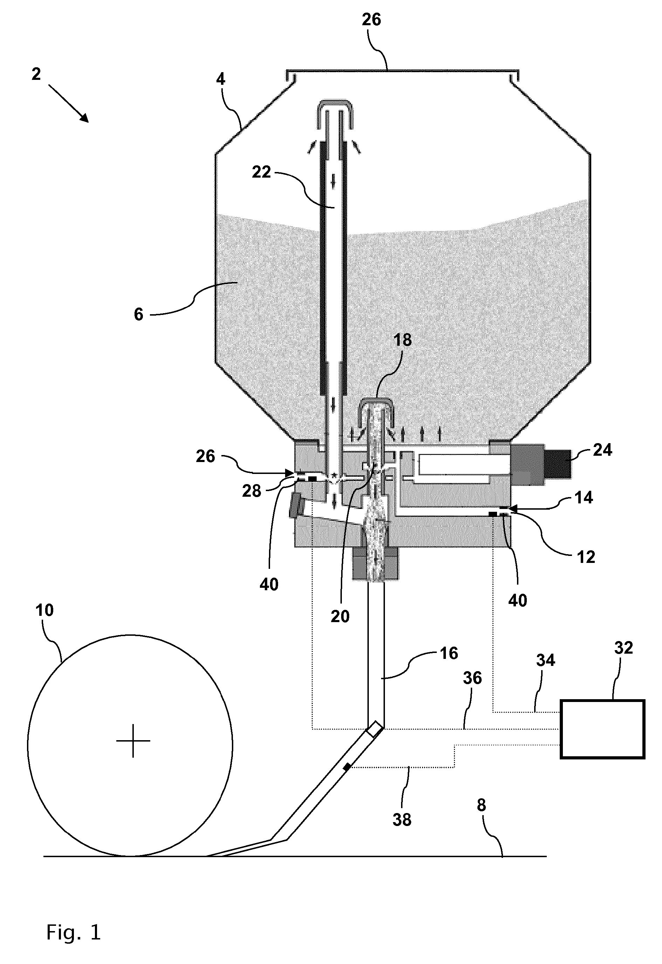

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei die einzige Figur eine schematische Darstellung einer Sandungsvorrichtung 2 zeigt.

Die Sandungsanlage 2 ist dazu geeignet, in einem Behälter 4 eingefüllten Sand 6 auf eine Schiene 8 zu streuen, auf der ein Rad 10 eines nicht weiter dargestellten Schienenfahrzeugs rollt. Die Sandungsanlage 2 kann dabei Teil des Schienenfahrzeuges sein. Der ausgestreute Sand 6 kann die Adhäsion zwischen der Schiene 8 und dem Rad 10 verbessern.

Der Sand 6 wird mittels an einem Versorgungsanschluss 12 anliegender Druckluft 14 aus dem Behälter 4 in ein Sandungsrohr 16 gedrückt, das den Sand 6 zur Kontaktstelle zwischen Schiene 8 und Rad 10 fördert. Über dem Sandungsrohr 16 ist ein Deckel 18 angeordnet, mit dem verhindert wird, dass Sand 6 durch schwerkraftbedingt in das Sandungsrohr 16 eindringt, und zur Kontaktstelle zwischen Schiene 8 und Rad 10 geführt wird. In dem Sandungsrohr 16 kann eine Ejektordüse 20 angeordnet sein, die ebenfalls mittels der Druckluft 12 in dem Sandungsrohr 16 einen Unterdruck erzeugt und somit das Einführen des Sandes 6 in das Sandungsrohr 16 verbessert. Ein sich im Behälter 4 aufbauender Überdruck kann dabei über ein Ausgleichsrohr 22 abgebaut werden.

In der vorliegenden Ausführung weist die Sandungsanlage 2 ferner eine Heizung 24 auf, mit der der im Behälter 4 gelagerte Sand 6 getrocknet werden kann. Dazu ist die Heizung 24 in einem nicht weiter referenzierten Trocknungskanal eingesetzt, über den aus einem Trocknungsanschluss 26 Trocknungsluft 28 aufgeheizt und in den Behälter 4 geleitet werden kann. Ein Teil der Trocknungsluft 28 kann ferner in einer weiteren Ejektordüse 30 verwendet werden, um einen Unterdruck im Ausgleichsrohr 22 zu erzeugen, um den Abbau des Überdruckes im Behälter zu fördern.

In der vorliegenden Ausführung ist eine Überwachungsvorrichtung 32 vorgesehen, den Funktionszustand der Sandungsanlage 2 zu überwachen. Die Überwachungsvorrichtung 32 kann dabei Teil der Sandungsanlage 2 sein oder getrennt von der Sandungsanlage 2 beispielsweise in einem Führerhaus des nicht weiter dargestellten Schienenfahrzeuges angeordnet sein.

Die Überwachungsvorrichtung 32 erhält in der vorliegenden Ausführung einen ersten Druck 34, der am Versorgungsanschluss 12 gemessen wird, einen zweiten Druck 36, der am Trocknungsanschluss 28 gemessen wird und einen Massenstrom 38, der im Sandungsrohr 16 gemessen wird. Die Messungen erfolgen in der vorliegenden Ausführung mit dem Fachmann bekannten und nicht weiter referenzierten Sensoren.

Der erste, am Versorgungsanschluss 12 gemessene Druck 34 und der zweite, am Trocknungsanschluss 28 gemessene Druck 36 werden in der vorliegenden Ausführung in Strömungsrichtung betrachtet je nach einer Blende 40 gemessen, die in den jeweiligen Anschluss 12, 28 einen definierten pneumatischen Widerstand einbringt. Sind die Drücke der Druckluft 12 und der Trocknungsluft 26 vor den jeweiligen Blenden 40 bekannt, kann über die beiden gemessenen Drücke 34, 36 und den bekannten pneumatische Widerstand der Blenden 40 der Massenstrom durch die Blenden 40 bestimmt werden. Diese beiden Massenströme entsprechen den der Sandungsanlage 2 zugeführten Massenströmen. Der Massenstrom 38 im Sandungsrohr 16 entspricht dem der Sandungsanlage 2 abgeführten Massenstrom.

In einer dem Fachmann kann nun aus dem bekannten Drücken und dem bekannten Massenströmen der pneumatische Widerstand der gesamten Sandungsanlage 2 bestimmt werden.

Anhand dieses nun bestimmten pneumatischen Widerstandes lässt sich der Funktionszustand der Sandungsanlage 2 in vielerlei Hinsicht überprüfen. Ausgehend davon, dass die Sandungsanlage 2 in einem fehlerfreien Funktionszustand einen bestimmten pneumatischen Sollwiderstand aufweist, kann darauf geschlossen werden, dass die Sandungsanlage 2 beispielsweise durch Sandbrücken im Behälter 4 verstopft ist, wenn der in der oben beschriebenen Weise bestimmte pneumatische Widerstand größer als der pneumatische Sollwiderstand ist. Andererseits kann auf einen Behälter 4 mit einer ungenügenden Füllung an Sand 6 geschlossen werden, wenn der in der oben beschriebenen Weise bestimmte pneumatische Widerstand kleiner als der pneumatische Sollwiderstand ist.

Auf einen entsprechend fehlerhaften Funktionszustand kann dann mit entsprechenden Gegenmitteln versucht werden, zu reagieren. So können Sandbrücken beispielsweise mechanisch aufgelockert werden. Ein ungenügender Füllstand mit Sand kann dem Fahrer des nicht gezeigten Schienenfahrzeuges angezeigt werden.

## Patentansprüche

1. Verfahren zum Überwachen einer Vorrichtung (2), die eingerichtet ist, zwischen einem Rad (10) eines Schienenfahrzeuges und einer Schiene (8), auf der das Rad (10) fährt, pneumatisch ein adhäsionssteigerndes Mittel aufzutragen, **gekennzeichnet durch** Erfassen eines pneumatischen Widerstandes der Vorrichtung (2) zwischen zwei verschiedenen Punkten in der Vorrichtung; und Plausibilisieren eines Zustandes der Vorrichtung (2) basierend auf dem erfassten pneumatischen Widerstand.

2. Verfahren nach Anspruch 1, umfassend Erfassen des pneumatischen Widerstands der Vorrichtung (2) zwischen einer Druckluftzufuhr (12, 28), an der der Vorrichtung (2) Druckluft (14, 26) zugeführt wird, und einem Abgabepunkt (16), an dem das durch die Druckluft (14, 26) bewegte adhäsionssteigernde Mittel die Vorrichtung (2) verlässt.

3. Verfahren nach Anspruch 2, umfassend Bestimmen des pneumatischen Widerstandes basierend auf einer Massenstromdifferenz zwischen der Druckluftzufuhr (12, 28) und dem Abgabepunkt (16).

4. Verfahren nach Anspruch 2 oder 3, wobei die Druckluftzufuhr (12, 28) eine druckreduzierende Blende (40) umfasst und zum Erfassen des pneumatischen Widerstandes der reduzierte Druck nach der Blende und der Eingangsdruck an der Blende verwendet wird.

5. Verfahren nach Anspruch 4, umfassend Bestimmen des Massenstroms basierend auf einem an der Blende (40) herrschenden Druckverhältnis und einem Absolutdruck an der Blende.

6. Verfahren nach Anspruch 4 oder 5, umfassend Plausibilisieren des Zustands der Vorrichtung (2) ferner basierend auf dem reduzierten Druck nach der Blende (40).

7. Verfahren nach einem der vorstehenden Ansprüche, wobei zum Plausibilisieren des Zustands der Vorrichtung (2) der erfasste pneumatische Widerstand einem Soll-widerstand gegenübergestellt wird.

8. Verfahren nach einem der Ansprüche 2 bis 7, wobei die Druckluftzufuhr (12, 28) einen Druckluftanschluss (12) zum Zuführen von das adhäsionssteigernde Mittel bewegender Druckluft (14) und einen Trocknungsanschluss (28) zum Zuführen von das adhäsionssteigernde Mittel trocknender Druckluft (26) umfasst.

9. Überwachungsvorrichtung (32) besonders geeignet zur Durchführung eines Verfahrens nach einem der vorstehenden Ansprüche.

10. Sandungsvorrichtung (2) zum Auftragen eines adhäsionssteigernden Mittels zwischen ein Rad (10) eines Schienenfahrzeuges und eine Schiene (8), auf der das Rad (10) fährt, umfassend eine Überwachungsvorrichtung (32) nach Anspruch 9.

11. Computerprogramm mit Programmcodemitteln, um alle Schritte eines Verfahrens nach einem der Ansprüche 1 bis 8 durchzuführen, wenn das Computerprogramm auf einem Computer oder einer Überwachungsvorrichtung nach Anspruch 9 ausgeführt wird.

12. Computerprogrammprodukt mit Programmcode, der auf einem computerlesbaren Datenträger gespeichert ist und der, wenn er auf einer Datenverarbeitungseinrichtung ausgeführt wird, ein Verfahren nach einem der Ansprüche 1 bis 8 durchführt.

## Claims

1. Method for monitoring a device (2) which is designed to pneumatically apply an adhesion-increasing medium between a wheel (10) of a rail vehicle and a rail (8) on which the wheel (10) is traveling, **characterized by** detecting a pneumatic resistance of the device (2) between two different points in the device; and checking the plausibility of a state of the device (2) on the basis of the detected pneumatic resistance.

2. Method according to Claim 1, comprising detecting the pneumatic resistance of the device (2) between a compressed-air supply (12, 28), at which compressed air (14, 26) is supplied to the device (2), and a discharge point (16), at which the adhesion-increasing medium that is set in motion by the compressed air (14, 26) exits the device (2).

3. Method according to Claim 2, comprising determining the pneumatic resistance on the basis of a mass flow difference between the compressed-air supply (12, 28) and the discharge point (16).

4. Method according to Claim 2 or 3, wherein the compressed-air supply (12, 28) comprises a pressure-reducing orifice (40), and the reduced pressure downstream of the orifice and the inlet pressure at the orifice are used for the detection of the pneumatic resistance.

5. Method according to Claim 4, comprising determining the mass flow on the basis of a pressure ratio prevailing across the orifice (40) and an absolute pressure at the orifice.

6. Method according to Claim 4 or 5, comprising checking the plausibility of the state of the device (2) also on the basis of the reduced pressure downstream of the orifice (40).

7. Method according to one of the preceding claims, wherein, for the checking of the plausibility of the state of the device (2), the detected pneumatic resistance is compared with a target resistance.

8. Method according to one of Claims 2 to 7, wherein the compressed-air supply (12, 28) comprises a compressed-air port (12) for the supply of compressed air (14) that sets the adhesion-increasing medium in motion, and a drying port (28) for the supply of the compressed air (26) that dries the adhesion-increasing medium.

9. Monitoring device (32) particularly suitable for carrying out a method according to one of the preceding claims.

10. Sanding device (2) for applying an adhesion-increasing medium between a wheel (10) of a rail vehicle and a rail (8) on which the wheel (10) is traveling, comprising a monitoring device (32) according to Claim 9.

11. Computer program having program code means for carrying out all of the steps of a method according to one of Claims 1 to 8 when the computer program is executed on a computer or a monitoring device according to Claim 9.

12. Computer program product having program code which is stored on a computer-readable data carrier and which carries out a method according to one of Claims 1 to 8 when executed on a data processing device.

## Revendications

1. Procédé de contrôle d'un dispositif (2) conçu pour déposer pneumatiquement un agent augmentant l'adhérence entre une roue (10) d'un véhicule ferroviaire et un rail (8), sur lequel roule la roue (10), **caractérisé par** la détection d'une résistance pneumatique du dispositif (2) entre deux points différents dans le dispositif et la vraisemblance d'un état du dispositif (2) reposant sur la résistance pneumatique détectée.

2. Procédé suivant la revendication 1, comprenant la détection de la résistance pneumatique du dispositif (2) entre un apport (12, 28) d'air comprimé où de l'air (14, 26) est apporté au dispositif (2) et un point (16) de sortie où l'agent augmentant l'adhérence déplacé par l'air (14, 26) comprimé quitte le dispositif (2).

3. Procédé suivant la revendication 2, comprenant une détermination de la résistance pneumatique basée sur une différence de courant massique entre l'apport (12, 28) d'air comprimé et le point (16) de sortie.

4. Procédé suivant la revendication 2 ou 3, dans lequel l'apport (12, 28) d'air comprimé comprend un diaphragme (40) réduisant la pression et on utilise pour la détection de la résistance pneumatique la pression réduite après le diaphragme et la pression d'entrée sur le diaphragme.

5. Procédé suivant la revendication 4, comprenant une détermination du courant massique basée sur un rapport de pression régnant sur le diaphragme (40) et une pression absolue sur le diaphragme.

6. Procédé suivant la revendication 4 ou 5, comprenant la vraisemblance de l'état du dispositif (2) basée, en outre, sur la pression réduite après le diaphragme (40).

7. Procédé suivant l'une des revendications précédentes, dans lequel, pour la vraisemblance de l'état du dispositif (2), on confronte la résistance pneumatique détectée à une résistance de consigne.

8. Procédé suivant l'une des revendications 2 à 7, dans lequel l'apport (12, 28) d'air comprimé comprend un raccord (12) pour de l'air comprimé pour apporter de l'air (14) comprimé déplaçant l'agent augmentant l'adhérence et un raccord (28) de séchage pour l'apport de l'air (26) comprimé séchant le moyen augmentant l'adhérence.

9. Dispositif (32) de contrôle convenant notamment pour effectuer un procédé suivant l'une des revendications précédentes.

10. Dispositif (2) de sablage pour le dépôt d'un agent augmentant l'adhérence entre une roue (10) d'un véhicule ferroviaire et un rail (8), sur lequel roule la roue (10), comprenant un dispositif (32) de contrôle suivant la revendication 9.

11. Programme d'ordinateur ayant des moyens de code de programme pour effectuer tous les stades d'un procédé suivant l'une des revendications 1 à 8, lorsque le programme d'ordinateur est réalisé sur un ordinateur ou sur un dispositif de contrôle suivant la revendication 9.

12. Produit de programme d'ordinateur ayant un code de programme, qui est mémorisé sur un support de données déchiffrable par ordinateur et qui, lorsqu'il est réalisé sur un dispositif de traitement de données, effectue un procédé suivant l'une des revendications 1 à 8.
